# EUROPEAN PATENT APPLICATION

(11) **EP 4 667 079 A1**
(43) Date of publication of application: **24.12.2025**
(21) Application number: 24183079.3
(22) Date of filing: 19.06.2024
(51) Int. Cl.: B01D 3/00

(54) **SYSTEMS AND METHODS FOR SEPARATING A FEED FLOW**

(71) Applicant: Koch Engineered Solutions GmbH, 40723 Hilden (DE)
(72) Inventor: Christmann, Jochen, 67489 Kirrweiler (DE); Gratt, Thomas, 67489 Kirrweiler (DE)
(74) Representative: Ter Meer Steinmeister & Partner

(57) **Abstract**

The present disclosure relates to a system. The system comprises at least one first heat exchanger configured to transfer energy from a first mass flow to a first feed flow; at least one first separation unit configured to separate the first feed flow into at least a first partial flow and a second partial flow; at least one compression unit configured to transfer energy to the first partial flow; and at least one second heat exchanger configured to transfer energy from the first partial flow to a second mass flow. The first mass flow and/or the second mass flow is not in fluid flow communication with the first separation unit.

## Description

### FIELD OF THE DISCLOSURE

The present disclosure relates to a system and a method for separating a flow into at least two partial flows.

### BACKGROUND OF THE DISCLOSURE

Various types of systems for thermal separation of a feed flow into at least two partial flows are known in the art. For example, distillation/rectification columns are known into which a feed is introduced. The feed includes at least two components that are mixed and are to be separated. For example, the feed may include two components that are mixed and have different boiling points. When the feed is heated and at least partially evaporated, the gaseous phase contains a higher concentration of the component with the lower boiling point and the liquid phase contains a higher concentration of the component with the higher boiling point.

It is also possible to heat (and partially evaporate) a feed flow such that the feed flow is at least partially gaseous and to introduce the at least partially gaseous feed flow into a separator. In the separator, the feed flow can be separated into a liquid portion and into a gaseous portion.

Intrinsically, energy consumption of thermal separation techniques is rather high.

### SUMMARY OF THE DISCLOSURE

It is an object of the present disclosure to reduce (external) energy consumption during separation of at least one feed flow. It is another object of the present disclosure to increase recovery of energy during separation of at least one feed flow. It is another object of the present disclosure to reduce (external) energy consumption when at least two separation tasks are coupled. It is another object of the present disclosure to increase energy recovery when at least two separation tasks are coupled.

One or more of the above objects are solved by the combination of features of the independent claims. Advantageous embodiments are provided in the respective dependent claims and the description. Features of an independent claim may be combined with features of one or more claims dependent on the independent claim, and features of one or more dependent claims can be combined with each other. Also, features of independent claims may be combined.

According to an aspect of the present disclosure a system is presented. The system may be a system for separating a first feed flow. The system may comprise at least one first heat exchanger configured to transfer energy from a first mass flow to a first feed flow. The system may comprise at least one first separation unit configured to separate the first feed flow into at least a first partial flow and a second partial flow. The system may comprise at least one compression unit configured to transfer energy to the first partial flow. The system may comprise at least one second heat exchanger configured to transfer energy from the first partial flow to a second mass flow. Optionally, the first mass flow and/or the second mass flow may not be in fluid flow communication with the first separation unit.

According to an aspect of the present disclosure a system is presented. The system may comprise at least one first heat exchanger configured to transfer energy from a first mass flow to a first feed flow. The system may comprise at least one first separation unit configured to separate the first feed flow into at least a first partial flow and a second partial flow. The system may comprise at least one compression unit configured to transfer energy to the first partial flow. The system may comprise at least one second heat exchanger configured to transfer energy from the first partial flow to a second mass flow. Optionally, the system comprises a second separation unit. The second separation unit may be configured to separate a second feed flow into the first mass flow and the second mass flow.

According to an aspect of the present disclosure a method is presented. The method may be a method for separating a first feed flow. The method may comprise: transferring, by at least one first heat exchanger, energy from a first mass flow to a first feed flow. The method may comprise: separating, by at least one first separation unit, the first feed flow into at least a first partial flow and a second partial flow. The method may comprise: transferring, by at least one compression unit, energy to the first partial flow. The method may comprise: transferring, by at least one second heat exchanger, energy from the first partial flow to a second mass flow. Optionally, the first mass flow and/or the second mass flow may not be in fluid flow communication with the first separation unit.

Any herein disclosed system may be employed in any herein disclosed method. Any herein disclosed method may be performed by any herein disclosed system.

In general, according to the invention, (thermal) energy in the form of a first mass flow having an elevated temperature may be present. The energy of the first mass flow may be used to heat and preferably partially evaporate a feed flow that is to be separated in a separation unit. A partial flow created in the separation unit may have an elevated temperature or is at least partially evaporated from liquid to gaseous phase. The temperature (and/or pressure) of the partial flow can be increased to an even higher temperature (and/or pressure) such that the partial flow can be used to heat a second mass flow. Thereby, external energy requirements can be reduced, and energy recovery can be increased.

The first and second mass flows may be related to or be part of a different (second) separation process including a second separation unit. For example, the first and second mass flows may not be in fluid flow communication with the first separation unit which is used in a first separation process. The first and second separation processes may be (thermally) coupled via the first and second heat exchangers.

Any herein disclosed heat exchanger may include or may be a double-pipe heat exchanger, a shell-and-tube heat exchanger, a plate heat exchanger, a condenser, a boiler, a reboiler and/or an evaporator.

The first mass flow may be at least partially gaseous, preferably when entering the first heat exchanger. The first mass flow may be partially gaseous and partially liquid. At least 50 mass-% (mass percent), preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-%, of the first mass flow may be gaseous, preferably when entering the first heat exchanger.

In general, mass percent (mass-%) is defined as a mass fraction of the total mass.

Each one of the herein disclosed numerical values of mass fractions (expressed in mass-%) may be numerical values of volume fractions (expressed in vol.-%). In other words, the unit "mass-%" may be replaced by "vol.-%" in the present disclosure. For example, if a mass fraction of at least 50 mass-% is described, a volume fraction of at least 50 vol.-% is also disclosed. Vol.-% is defined as volume fraction of the total volume.

The first mass flow may include one or more components.

At the entrance or inlet of the first heat exchanger, the first mass flow may have a temperature of at least 25 °C, preferably at least 50 °C, preferably at least 75 °C, preferably at least 100 °C, preferably of at least 120 °C, preferably of at least 140 °C, preferably of at least 160 °C, preferably of at least 180 °C, preferably of at least 200 °C, preferably of at least 220 °C, preferably of at least 240 °C, preferably of at least 260 °C, preferably of at least 280 °C, preferably of at least 300 °C. At the entrance or inlet of the first heat exchanger, the first mass flow may have a temperature of 25 °C to 300 °C.

The first feed flow may be at least partially liquid, preferably when entering the first heat exchanger. At least 50 mass-%, preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-%, of the first feed flow may be liquid, preferably when entering the first heat exchanger.

The first feed flow may include at least two components, optionally more than two components. The first feed flow may contain at least one solid substance or at least one dissolved solid.

At the entrance or inlet of the first heat exchanger, the first feed flow may have a temperature of at most 300 °C, preferably at most 275 °C, preferably at most 250 °C, preferably at most 225 °C, preferably at most 200 °C, preferably of at most 180 °C, preferably of at most 160 °C, preferably of at most 140 °C, preferably of at most 120 °C, preferably of at most 100 °C, preferably of at most 80 °C, preferably of at most 60 °C, preferably of at most 50 °C, preferably at most 25 °C. At the entrance or inlet of the first heat exchanger, the first feed flow may have a temperature of 25 °C to 300 °C.

At the respective entrance or inlet of the first heat exchanger, a temperature difference between the first mass flow and the first feed flow may be at least 1 °C, preferably at least 5 °C, preferably at least 10 °C, preferably at least 20 °C, preferably at least 30 °C, preferably at least 40 °C, preferably at least 50 °C, preferably at least 60 °C, preferably at least 70 °C, preferably at least 80 °C, preferably at least 90 °C, preferably at least 100 °C. The temperature of the first mass flow is preferably higher than the temperature of the first feed flow.

The separation of the first feed flow by the first separation unit may be a full separation of at least two components or a partial separation of at least two components in the first feed flow. The first partial flow may have a higher concentration of a first component than the second partial flow. The second partial flow may have a higher concentration of a second component than the first partial flow. The first partial flow may have a higher concentration of the first component than the first feed flow. The second partial flow may have a lower concentration of the first component than the first feed flow. The first partial flow may have a lower concentration of the second component than the first feed flow. The second partial flow may have a higher concentration of the second component than the first feed flow. The boiling point of the first component may be lower than the boiling point of the second component. The second component may be one or more solid substance(s) or one or more dissolved solid(s). The first partial flow may be a top product and the second partial flow may be a bottom product.

At an outlet of the first separation unit, the first partial flow may be at least partially gaseous. The first partial flow may be partially gaseous and partially liquid. At least 50 mass-%, preferably at least 60 mass-%, preferably at least 70 mass-%, preferably at least 80 mass-%, preferably at least 90-mass %, preferably at least 95 mass-%, preferably at least 98 mass-%, preferably at least 99 mass-%, or even substantially 100 mass-% of the first partial flow may be gaseous, preferably at the outlet of the first separation unit.

At an outlet of the first separation unit, the second partial flow may be at least partially liquid. The second partial flow may be partially liquid and partially gaseous. At least 50 mass-%, preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-% of the second partial flow may be liquid, preferably at the outlet of the first separation unit.

The second mass flow may be at least partially liquid, preferably when entering the second heat exchanger. The second mass flow may be partially gaseous and partially liquid. At least 50 mass-%, preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-%, of the second mass flow may be liquid, preferably when entering the first heat exchanger.

The second mass flow may include one or more components. The second mass flow may contain at least one solid substance or at least one dissolved solid.

At the entrance or inlet of the second heat exchanger, the second mass flow may have a temperature of at least 25 °C, preferably at least 50 °C, preferably at least 60 °C, preferably of at least 80 °C, preferably of at least 100 °C, preferably of at least 120 °C, preferably of at least 120 °C, preferably of at least 140 °C, preferably of at least 160 °C, preferably of at least 180 °C, preferably of at least 200 °C, preferably of at least 220 °C, preferably of at least 240 °C, preferably at least 260 °C, preferably of at least 280 °C, preferably of at least 300 °C. At the entrance or inlet of the second heat exchanger, the second mass flow may have a temperature of 25 °C to 300 °C.

The first partial flow may be at least partially gaseous, preferably when entering the second heat exchanger. At least 50 mass-%, preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-%, of the first partial flow may be gaseous, preferably when entering the second heat exchanger.

The first partial flow may include one or more components.

At the entrance or inlet of the second heat exchanger, the first partial flow may have a temperature of at least 30 °C, preferably at least 50 °C, preferably at least 75 °C, preferably at least 100 °C, preferably of at least 120 °C, preferably of at least 140 °C, preferably of at least 160 °C, preferably of at least 180 °C, preferably of at least 200 °C, preferably of at least 220 °C, preferably of at least 240 °C, preferably of at least 260 °C, preferably of at least 280 °C, preferably of at least 300 °C. At the entrance or inlet of the second heat exchanger, the first partial flow may have a temperature of 30 °C to 300 °C.

At the respective entrance or inlet of the second heat exchanger, a temperature difference between the first partial flow and the second mass flow may be at least 1 °C, preferably at least 5 °C, preferably at least 10 °C, preferably at least 20 °C, preferably at least 30 °C, preferably at least 40 °C, preferably at least 50 °C, preferably at least 60 °C, preferably at least 70 °C, preferably at least 80 °C, preferably at least 90 °C, preferably at least 100 °C. The temperature of the first partial flow is preferably higher than the temperature of the second mass flow.

The first mass flow and/or the second mass flow may not be in fluid flow communication with the first separation unit. In other words, the system may not include a fluid path, e.g., via tubing, that allows the first mass flow and/or the second mass flow to flow into or out of the first separation unit. The first mass flow and/or the second mass flow may be (fluidly or in terms of fluid communication) separated from the first separation unit. The first mass flow and/or the second mass flow may relate to a process that is different from the process related to or including the first separation unit. The first mass flow may flow on one side of the first heat exchanger and the first feed flow may flow on another side of the first heat exchanger. The first partial flow may flow on one side of the second heat exchanger and the second mass flow may flow on another side of the second heat exchanger.

At least a portion of the second mass flow, may be directed into the first heat exchanger, preferably before entering the second heat exchanger. The second mass flow may be directly directed into the first heat exchanger or may be introduced into or combined with the first feed flow before entering the first heat exchanger.

The first mass flow and the second mass flow may be different mass flows. The first mass flow and the second mass flow may differ in at least one of: composition, components included in the respective mass flow, concentration of one or more components in the respective mass flow, temperature, density, gaseous phase and liquid phase ratio, and pressure.

For example, a component may have a higher concentration in the first mass flow than in the second mass flow. A component that is present in the first mass flow may not be present in the second mass flow.

The temperature of the first mass flow and the second mass flow, preferably at the respective entrance or inlet of the first and second heat exchanger, may differ by at least 1 °C, preferably by at least 5 °C, preferably by at least 10 °C, preferably by at least 20 °C, preferably by at least 40 °C, preferably by at least 60 °C, preferably by at least 80 °C, preferably by at least 100 °C, preferably by at least 150 °C, preferably by at least 200 °C. The temperature of the second mass flow may be higher than the temperature of the first mass flow.

The first separation unit may be configured to separate the first feed flow into an at least partially gaseous phase and an at least partially liquid phase. The at least partially gaseous phase may be the first partial flow. The at least partially liquid phase may be the second partial flow. The gaseous phase may be mainly gaseous. In other words, the gaseous phase may have a gas content of more than 50 mass-%, more than 60 mass-%, more than 70 mass-%, more than 80 mass-%, more than 90 mass-%, more than 95 mass-%, more than 97 mass-%, more than 99 mass-%, or even substantially 100 mass-%. The liquid phase may be mainly liquid. In other words, the liquid phase may have a liquid content of more than 50 mass-%, more than 60 mass-%, more than 70 mass-%, more than 80 mass-%, more than 90 mass-%, more than 95 mass-%, more than 97 mass-%, more than 99 mass-%, or even substantially 100 mass-%. The gaseous phase may be the first partial flow. The liquid phase may be the second partial flow.

The second partial flow may contain at least one solid substance or at least one dissolved solid.

The first separation unit may be a separator, preferably a liquid-gas-separator. The first separation unit may be a centrifugal separator, an inertial separator, a gravity separator, a vessel, or a demister. The demister may be a wire mesh demister or a lamella demister.

The first separation unit may include a heating unit for heating the first feed flow. The heating unit may be a heat exchanger, a burner or a resistive heater. Alternatively, the first separation unit may not include a heating unit. For example, the first feed flow may be separated by the first separation unit without additional energy input, e.g., only based on energy present in the first feed flow or based on differences of density of different phases in the first feed flow before entering the first separation unit (after passing the first heat exchanger).

A separation of components in the first feed flow by the first separation unit may not be a full separation. In other words, a component in the first feed flow may be present in the first partial flow and in the second partial flow. The concentration of the component may differ in the first partial flow and in the second partial flow.

The first heat exchanger may include the first separation unit. The first separation unit may be included in the first heat exchanger. In other words, the first heat exchanger and the first separation unit may not be (physically) separate devices. The first heat exchanger and the first separation unit may be combined into one device.

The compression unit may be configured to introduce or input energy into the first partial flow. The compression unit may be configured to increase the density, the temperature and/or the pressure of the first partial flow. The temperature of the first partial flow may be increased by the compression unit by at least least 1 °C, preferably by at least 5 °C, preferably by at least 10 °C, at least 20 °C, at least 30 °C, at least 40 °C, at least 50 °C, at least 60 °C, at least 80 °C, or at least 100 °C, or at least 150 °C or at least 200 °C. The density of the first partial flow may be increased by the compression unit by at least 1 %, by at least 25 %, by at least 50 %, by at least 75 %, by at least 100 %, by at least 200 %, by at least 400 %, by at least 600 %, or by at least 1000 % or by at least 5000 % or by at least 10000 %. The pressure of the first partial flow may be increased by the compression unit by at least 1 %, by at least 25 %, by at least 50 %, by at least 75 %, by at least 100 %, by at least 200 %, by at least 400 %, by at least 600 %, or by at least 1000 % or by at least 5000 % or by at least 10000 %. The increase in density and the increase in pressure may compare the pressure (immediately) before the compression unit and (immediately) after the compression unit, e.g., at an inlet and at an outlet of the compression unit.

The compression unit may include or may be a single-stage or multi-stage mechanical compression unit. Alternatively or additionally, the compression unit may include or may be a single-stage or multi-stage thermal compression unit.

For example, the compression unit may use mechanical vapor compression, mechanical vapor recompression, thermal vapor compression or thermal vapor recompression to increase the density, the temperature and/or the pressure of the first partial flow.

The compression unit may include or may be a mechanical vapor compressor, a fan, a blower, or a compressor. Also, the compression unit may include or may be a thermal vapor compressor, e.g., with the help of motive steam.

The compression unit may be configured to superheat the first partial flow.

The first heat exchanger may be configured to at least partially evaporate the first feed flow. In other words, the first feed flow may be at least partially evaporated in the first heat exchanger. Energy from the first mass flow may be transferred to the first feed flow. Thereby, the first feed flow may be heated and/or at least partially evaporated.

The first heat exchanger may be configured to at least partially condense the first mass flow. In other words, the first mass flow may be at least partially condensed in the first heat exchanger. Energy from the first mass flow may be transferred to the first feed flow. Thereby, the first mass flow may be at least partially condensed and/or cooled.

The second heat exchanger may be configured to at least partially condense the first partial flow. In other words, the first partial flow may be at least partially condensed in the second heat exchanger. Energy from the first partial flow may be transferred to the second mass flow. Thereby, the first partial flow may be at least partially condensed and/or cooled.

The second heat exchanger may be configured to at least partially evaporate the second mass flow. In other words, the second mass flow may be at least partially evaporated in the second heat exchanger. Energy from the first partial flow may be transferred to the second mass flow. Thereby, the second mass flow may be heated and/or at least partially evaporated.

The second heat exchanger may also be configured to heat the second mass flow, preferably without evaporation of (a portion of) the second mass flow. A flash unit may be provided after the second heat exchanger. The pressure of the second mass flow may be reduced in the flash unit and at least a portion of the second mass flow may be evaporated by the reduction in pressure. The flash unit may be provided between the second heat exchanger and below described second separation unit. Alternatively, the flash unit may be integrated in the second separation unit or the flash may take place directly in the second separation unit.

The system may include at least one second separation unit. The first mass flow and/or the second mass flow may be in fluid flow communication with the second separation unit. The system may include a fluid path, e.g., via tubing, that allows the first mass flow and/or the second mass flow to flow into or out of the second separation unit.

The first separation unit and the second separation unit may be distinct separation units, e.g., the first separation unit and the second separation unit are physically or in terms of fluid communication separated. The system may include no fluid connection between the first separation unit and the second separation unit. In other words, a fluid that is related to the process of the first separation unit may not be able to flow into or out of the second separation unit. Also, a fluid that is related to the process of the second separation unit may not be able to flow into or out of the first separation unit.

The first feed flow, the first partial flow and/or the second partial flow may flow in the flow path that connects the first separation unit to the first heat exchanger, the compression unit and/or the second heat exchanger.

The first mass flow and/or the second mass flow may flow in the flow path that connects the second separation unit to the first heat exchanger and/or the second heat exchanger.

While energy is transferred between the first mass flow and the first feed flow in the first heat exchanger, the first mass flow and the first feed flow are separated in the first heat exchanger such that the first mass flow and the first feed flow are not in fluid communication. Similarly, energy is transferred between the second mass flow and the first partial flow in the second heat exchanger, however, the second mass flow and the first partial flow are separated in the second heat exchanger such that the second mass flow and the first partial flow are not in fluid communication.

The second separation unit may be configured to separate a second feed flow into the first mass flow and into the second mass flow. The second separation unit may be a single-stage distillation or rectification column, preferably a concentration and/or stripper column. The second separation unit may be a multi-stage distillation or rectification column system or plant.

The first feed flow and the second feed flow may be same or different feed flows. Preferably, the first feed flow and the second feed flow differ in at least one of: composition, components included in the respective feed flow, concentration of one or more components in the respective feed flow, temperature, density, gaseous phase and liquid phase ratio, and pressure.

The second feed flow may be at least partially liquid, preferably when entering the second separation unit. At least 50 mass-%, preferably at least 60 mass-%, preferably at least 70 mass-%, preferably at least 80 mass-%, preferably at least 90 mass-%, preferably at least 95 mass-%, preferably at least 98 mass-%, preferably at least 99 mass-%, or even substantially 100 mass-%, of the second feed flow may be liquid, preferably when entering the second separation unit.

The second feed flow may include at least two components, optionally more than two components. The second feed flow may contain at least one solid substance or at least one dissolved solid.

For example, the second feed flow may be introduced into the second separation unit. The second feed flow may be separated by the second separation unit into the first mass flow and the second mass flow. The second separation unit may be configured to separate the second feed flow into more than two partial flows (i.e., into more than two mass flows).

In general, the first mass flow may be a first partial flow of the second separation unit. The first partial flow of the second separation unit (first mass flow) may be provided by separation of the second feed flow in the second separation unit. The second mass flow may be a second partial flow of the second separation unit. The second partial flow of the second separation unit (second mass flow) may be provided by separation of the second feed flow in the second separation unit.

The first mass flow may be at least partially gaseous. The first mass flow may be a top product of the second separation unit. The first mass flow may include at least one component having a lower boiling point than a component in the second mass flow. The first mass flow may have a lower boiling point than the second mass flow. A concentration of a first component in the first mass flow may be higher than in the second mass flow. A concentration of a second component in the first mass flow may be lower than in the second mass flow. The first component may have a lower boiling point than the second component.

The second mass flow may be at least partially liquid. The second mass flow may be a bottom product of the second separation unit. The second mass flow may include at least one component having a higher boiling point than a component in the first mass flow. The second mass flow may have a higher boiling point than the first mass flow. A concentration of a second component in the second mass flow may be higher than in the first mass flow. A concentration of a first component in the second mass flow may be lower than in the first mass flow. The second component may have a higher boiling point than the first component.

The first feed flow may be heated or at least partially evaporated by the (thermal) energy transferred from the first mass flow and/or the first partial flow is cooled or at least partially condensed by the (thermal) energy transferred to the second mass flow.

The density, the temperature and/or the pressure of the first partial flow may be increased by the compression unit.

The first mass flow and/or the second mass flow may be in fluid flow communication with a/the second separation unit.

A/the second feed flow may be separated into at least the first mass flow and the second mass flow by the second separation unit.

At least a portion of the first mass flow may be fed into the second separation unit after passing through the first heat exchanger and/or at least a portion of the second mass flow may be fed into the second separation unit after passing through the second heat exchanger.

The second heat exchanger may be separate from the second separation unit. In other words, the second heat exchanger may not be included in the second separation unit. Also, the second heat exchanger may be included in the second separation unit. In this case, the first partial flow may enter the second separation unit such that it is inside the second separation unit. Still, the first partial flow may not be in fluid communication with (the inside of) the second separation unit.

At least a portion of the second partial flow may be introduced into the first feed flow. Preferably, at least a portion of the second partial flow is introduced into the first feed flow before entering the first heat exchanger.

In general, the processes disclosed herein may be continuous or discontinuous processes. For example, the second feed flow may be continuously fed into the second separation unit. The first mass flow and the second mass flow may be continuously generated by the second separation unit. The first mass flow may be continuously passed through the first heat exchanger. The second mass flow may be continuously passed through the second heat exchanger.

The first feed flow may be continuously passed through the first heat exchanger. The first feed flow may be continuously fed into the first separation unit. The first partial flow and the second partial flow may be continuously generated in the second separation unit. The first partial flow may be continuously fed into the compression unit. The first partial flow may be continuously passed through the second heat exchanger.

A portion of the second partial flow may be introduced into the feed flow. Also, no portion of the second partial flow may be introduced into the feed flow. The second partial flow may be (completely) discharged or collected after the first separation unit.

A portion of the first partial flow may not be fed into the compression unit. In other words, a portion of the first partial flow may be discharged or collected after the first separation unit. Also, the first partial flow may be (completely) fed into the compression unit, preferably after the first separation unit.

A portion of the first partial flow after the compression unit may not be fed into the second heat exchanger. In other words, a portion of the first partial flow may be discharged or collected after the compression unit.

After the second heat exchanger, the first partial flow may at most partially or may not be directed to the first heat exchanger, the compression unit and/or the first separation unit. After the second heat exchanger, the first partial flow may be at least partially or completely discharged or collected.

In general, if a (portion of a) flow is discharged or collected, the (portion of the) flow may also be condensed or processed otherwise.

### BRIEF DESCRIPTION OF THE DRAWINGS

The above-mentioned attributes and other features and advantages of the present disclosure and the manner of attaining them will become more apparent and the present disclosure itself will be better understood by reference to the following description of embodiments of the present technique taken in conjunction with the accompanying drawings, wherein:
- Fig. 1: shows a system 100; and
- Fig. 2: shows a system 200.

Hereinafter, above-mentioned and other features of the present disclosure are described in detail. Various embodiments are described with reference to the drawings, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the disclosure. It may be evident that such embodiments may be practiced without these specific details.

It may be noted that terms like "first", "second" and "third" are merely used to distinguishing elements, not to count elements. For example, when a "second" element is addressed, this does not imply that a "first" element must be present.

The steps described herein with reference to one or more systems may be employed by a method. Also, method steps described herein may be employed by any one of the herein described systems. For example, any one of the system may include a controller that is configured to perform any one of the herein disclosed method steps.

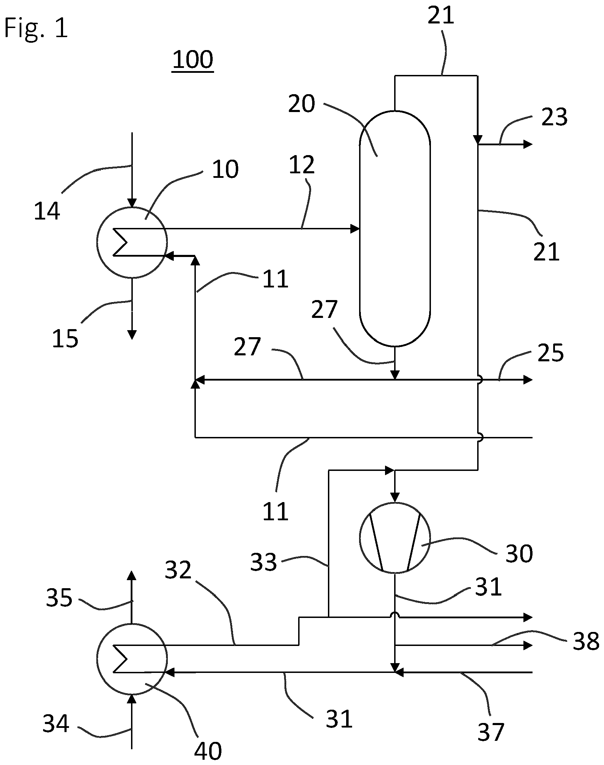

Fig. 1 shows a system 100. The system 100 may include at least one first heat exchanger 10. The first heat exchanger 10 may be configured to transfer (thermal) energy from a first mass flow to a first feed flow. The first mass flow and the first feed flow may come into thermal contact in the first heat exchanger 10. Physical contact of the first mass flow and the first feed flow may be prevented in the first heat exchanger 10. The first mass flow may have a higher temperature than the first feed flow. Based on the different temperatures of the first mass flow and the first feed flow, the energy is transferred.

The system 100 may include a tubing 11 connecting a first feed flow source to the first heat exchanger 10. The first feed flow source may be a reservoir in which the first feed is stored, e.g., a storage tank or a container or a process. Via tubing 11, the first feed flow may flow from the first feed flow source into the first heat exchanger 10.

The first feed flow may be at least partially liquid. Preferably, at least 80 mass-% or at least 90 mass-%, or even substantially 100 mass-%, of the first feed flow is liquid before the first feed flow enters the first heat exchanger 10.

In general, a tubing may be any element that provides a flow path for a fluid or for a flow. When two elements are "connected", e.g., by a tubing, these elements may be in fluid flow communication such that a fluid can flow from one of the elements to the other element. "Before" an element, e.g., before a heat exchanger, may mean "immediately before" or at the entrance or inlet of the respective element. In general, "before" and "after" may relate to the flow direction of a flow. For example, "before" may mean "upstream" and/or "after" may mean "downstream".

The system 100 may include a tubing 14. The tubing 14 may connect a first mass flow source to the first heat exchanger 10. Via tubing 14, the first mass flow may flow from the first mass flow source into the first heat exchanger 10.

The first mass flow may have a higher temperature than the first feed flow before the first mass flow and the first feed flow enter the first heat exchanger 10, preferably at the entrance or at respective inlets of the heat exchanger 10. Thereby, energy is transferred from the first mass flow to the first feed flow.

The first mass flow may be at least partially gaseous. Preferably, at least 80 mass-% or at least 90 mass-%, or even substantially 100 mass-%, of the first mass flow is gaseous before the first mass flow enters the first heat exchanger 10.

In the first heat exchanger 10, the first feed flow is heated and/or the first mass flow is cooled. The first feed flow may be at least partially evaporated in the first heat exchanger 10. The first mass flow may be at least partially condensed in the first heat exchanger 10.

The first mass flow may exit the first heat exchanger 10 via tubing 15.

The system 100 may comprise a first separation unit 20. The first separation unit 20 may be configured to separate the first feed flow into at least a first partial flow and a second partial flow. For example, the first separation unit 20 is a separator that separates the first feed flow based on the aggregation state of components or portions of the first feed flow. The first partial flow may mainly comprise gaseous substances of the first feed flow and the second partial flow may mainly comprise liquid and/or solid substances of the first feed flow.

At least 70 mass-% or at least 90 mass-% or even substantially 100 mass-% of the first partial flow may be gaseous, preferably when exiting the first separation unit 20. At least 70 mass-% or at least 90 mass-% or even substantially 100 mass-% of the second partial flow may be liquid (and may contain solid substances and/or dissolved solids), preferably when exiting the first separation unit 20.

The system 100 may comprise a tubing 12 connecting the first heat exchanger 10 and the first separation unit 20. Via tubing 12, the (heated) first feed flow may flow from the first heat exchanger 10 into the first separation unit 20.

The first mass flow may not be in fluid communication with the first separation unit 20. In other words, the first mass flow may not be able to flow into the first separation unit 20. Specifically, the first mass flow may relate or may be part of a process that does not involve the first separation unit 20.

The system 100 may comprise a compression unit 30. The compression unit 30 may be configured to increase the temperature, pressure and/or density of the first partial flow.

Tubing 21 may connect the first separation unit 20 to the compression unit 30. The first partial flow may flow from the first separation unit 20 to the compression unit 30 via the tubing 21.

A portion of the first partial flow may be discharged or collected via tubing 23. Tubing 23 may be connected to tubing 21 and preferably to a storage for collecting the portion of the first partial flow or to another process. Only a portion of the first partial flow may be introduced into the compression unit 30. Alternatively, the entire first partial flow exiting the separation unit 20 may be introduced into the compression unit 30.

The second partial flow may exit the separation unit 20 via tubing 27. A portion of the second partial flow exiting the separation unit 20 may be introduced into the first feed flow. Tubing 27 may connect the separation unit 20 to the first heat exchanger 10 (via tubing 11). Hence, the feed flow may include "fresh" feed from the feed flow source and may comprise at least a portion of the second partial flow exiting the separation unit 20.

Also, at least a portion of the second partial flow after exiting the first separation unit 20 may be discharged or collected or processed further, e.g., in a storage. This portion of the second partial flow may not be introduced into the first feed flow. It is possible that the entire second partial flow exiting the first separation unit 20 is discharged or collected or processed further. In other words, no portion of the second partial flow may be introduced into the first feed flow. The second partial flow may be discharged or collected via tubing 25. Tubing 25 may connect the first separation unit 20 to a storage for the second partial flow. Tubing 25 may be connected to tubing 27.

The fist partial flow may be mainly gaseous before it enters the compression unit 30. At least 70 mass-% or at least 90 mass-% or even substantially 100 mass-% of the first partial flow may be gaseous before it enters the compression unit 30.

Preferably, the temperature and/or pressure of the first partial flow is increased in the compression unit 30. The compression unit may transfer thermal and/or mechanical energy to the first partial flow.

After the compression unit 30, at most or at least a portion of the first partial flow may be collected or discharged or further processed in another process. Preferably the portion of the first partial flow, after the compression unit 30, may be collected or discharged or further processed in another process before the second heat exchanger 40. Tubing 38 may be connected to tubing 31 and preferably to a storage or another process. Alternatively, the entire first partial flow exiting the compression unit 30 may be introduced into the second heat exchanger 40.

The system 100 may comprise a second heat exchanger 40. The second heat exchanger 40 may be configured to transfer (thermal) energy from the (compressed or heated) first partial flow to a second mass flow. The first partial flow and the second mass flow may come into thermal contact in the second heat exchanger 40. Physical contact of the first partial flow and the second mass flow may be prevented in the second heat exchanger 40. The first partial flow may have a higher temperature than the second mass flow. Based on the different temperatures of the first partial flow and the second mass flow, the energy is transferred.

The compression unit 30 and the second heat exchanger 40 may be connected via tubing 31. The (compressed or heated) first partial flow may flow from the compression unit 30 to the second heat exchanger via tubing 31.

The system 100 may include a tubing 34 for introducing the second mass flow into the second heat exchanger 40.

When entering the second heat exchanger 40, the first partial flow may be mainly gaseous. For example, at least 70 mass-% or at least 90 mass-% or even substantially 100 mass-% of the first partial flow may be gaseous.

The second mass flow may be mainly liquid, when entering the second heat exchanger 40. At least 70 mass-% or at least 90 mass-% or even substantially 100 mass-% of the second mass flow may be liquid.

In the second heat exchanger 40, the first partial flow may be at least partially condensed. Also, in the second heat exchanger 40, the second mass flow may be heated and/or at least partially evaporated.

The second mass flow may exit the second heat exchanger 40 via tubing 35. The first partial flow may exit the second heat exchanger 40 via tubing 32. After exiting the second heat exchanger 40, the first partial flow may be discharged or collected, e.g., in a storage, or processed further. Tubing 32 may connect the second heat exchanger 40 to the storage for collecting the first partial flow or to another process. After the second heat exchanger 40, the first partial flow may be processed further (not shown in the figures).

A portion of the first partial flow after the second heat exchanger 40 may be partially fed back to the first heat exchanger 10, the first separation unit 20 and/or the compression unit 30. For example, a portion of the first partial flow after the second heat exchanger 40 may be introduced into the first partial flow before (or after) the compression unit 30. Tubing 33 may connect tubing 32 to tubing 21. Also, a portion of the first partial flow after the second heat exchanger 40 may be introduced into the first feed flow before the first heat exchanger 10 or after the first heat exchanger 10. Also, a portion of the first partial flow after the second heat exchanger 40 may be introduced into the first feed flow before the first separation unit 20, and preferably after the first heat exchanger 10.

An additional mass flow may be introduced into the first partial flow, preferably before or after the compression unit 30. The additional mass flow may have a lower or higher temperature than the first partial flow, preferably after passing the compression unit 30. For example, the additional mass flow may be gaseous (e. g. steam) or liquid (e. g. water). The additional mass flow allows to increase the temperature of the first partial flow and/or to increase the energy that is transferred from the first partial flow to the second mass flow in the second heat exchanger 40. The additional mass flow may also increase the pressure of the first partial flow. Alternatively, the additional mass flow may reduce the temperature and/or pressure of the first partial flow before or after the compression unit 30. This may avoid high superheating.

A portion of the first partial flow after passing through the second heat exchanger 40 may be introduced into the first partial flow before passing through the second heat exchanger 40. Preferably, the portion of the first partial flow is introduced into first partial flow after passing through the compression unit 30 and before passing through the second heat exchanger 40. For example, tubing 32 may be connected to tubing 31 or another tubing may be provided that connects tubing 32 and tubing 31. As described above, the partial flow may be at least partially condensed in the second heat exchanger 40. Liquid or partially liquid first partial flow may be introduced into mainly gaseous first partial flow. Thereby, the first partial flow after exiting the compression unit 30 may be cooled. As described above, it is also possible to introduce a portion of the first partial flow after the second heat exchanger 40 into the first partial flow before the compression unit 30.

Process flows may be used in heat integration or heat recovery. Specifically, flows that are collected or discharged from the system may be used in heat integration or heat recovery. For example, the first partial flow exiting the first separation unit 20 (e.g., via tubing 23) may be used to heat or preheat another medium or another flow, e.g., water or steam or the feed flow. Also, the second partial flow exiting the separation unit 20 (e.g., via tubing 25) may be used to heat or preheat another medium or another flow, e.g., water or steam or the feed flow. Further, the first partial flow exiting the second heat exchanger 40 (e.g., via tubing 32) may be used to heat or preheat another medium or another flow, e.g., water or steam or the feed flow.

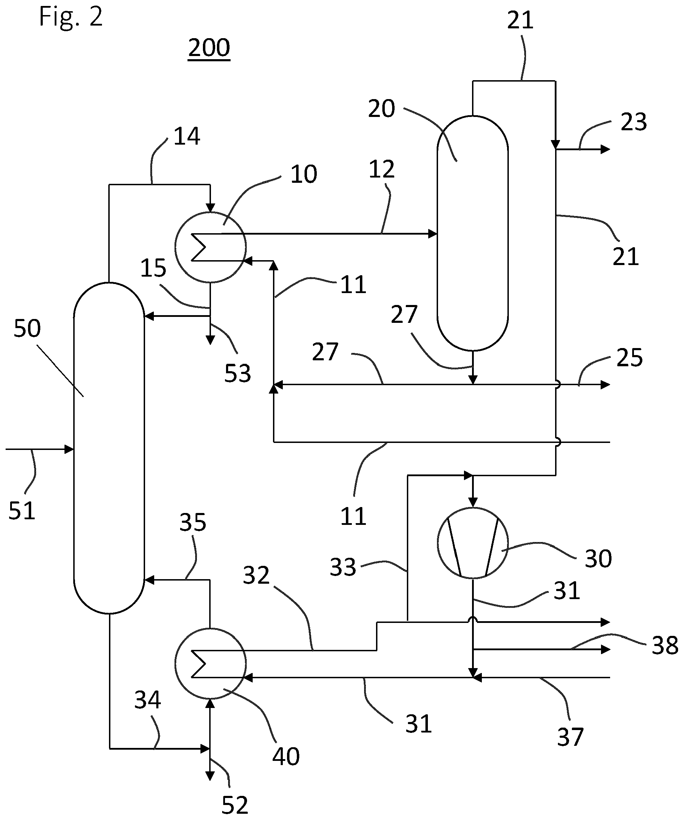

Fig. 2 shows a system 200. The system 200 may include several elements of the system 100. The description of these elements is not repeated for the system 200. For example, the system 200 includes the first heat exchanger 10, the first separation unit 20, the compression unit 30 and the second heat exchanger 40 as well as the respective tubing of the system 100. At least, these elements and their function may be included in the system 200 shown in Fig. 2.

The system 200 may include a second separation unit 50. The second separation unit 50 may be distillation or rectification column. The second separation unit 50 may include one column or more than one column. Specifically, the second separation unit 50 may be single-stage column or a multi-stage column system. The second separation unit 50 may be a concentration column, a stripper column or a concentration and stripper column.

The second separation unit 50 may be a different type of separation unit than the first separation unit 20. The second separation unit 50 and the first separation unit 20 may differ in at least one of: functional principle, operation, size, and functional elements used in the separation units. Also, the second separation unit 50 may be the same type of separation unit as the first separation unit 20.

A second feed flow may be fed into the second separation unit 50. The second feed flow may be different than the first feed flow. The second feed flow and the first feed flow may differ in at least one of: composition, components included in the feed flows, and concentration of one or more components in the feed flows. The second feed flow may include at least two different components.

The second separation unit 50 may be configured to separate the second feed flow into at least the first mass flow and the second mass flow. The first mass flow may be a first partial flow of the second separation unit 50. The second mass flow may be a second partial flow of the second separation unit 50.

The second mass flow may be at least or at most partially introduced into the first feed flow. In other words, the first feed flow that is to be separated in the first separation unit 20 may include at least or at most a portion of the second mass flow. Also, the first feed flow may consist of the second mass flow. Preferably (a portion of) the second mass flow before the second heat exchanger 40 (tubing 52) is introduced into the first feed flow. Alternatively, the first feed flow may not include second mass flow and/or first mass flow.

The second separation unit 50 may be connected to the first heat exchanger 10 via tubing 14. The first mass flow may flow from the second separation unit 50 to the first heat exchanger 10 via tubing 14.

The first mass flow may be a top product, e.g., top vapor, of the second separation unit 50. When exiting the second separation unit 50, at least 50 mass-%, at least 70 mass-% or at least 90 mass-% or even substantially 100 mass-% of the first mass flow may be gaseous.

The first mass flow may transfer (thermal) energy to the first feed flow in the first heat exchanger 10, e.g., as described above. The first mass flow may be at least partially condensed in the first heat exchanger 10.

A portion of the (at least partially condensed) first mass flow may be reintroduced into the second separation unit 50 via tubing 15, preferably after passing through the first heat exchanger 10. Tubing 15 may connect the first heat exchanger 10 to the second separation unit 50. It is also possible to reintroduce the entire (at least partially condensed) first mass flow into the second separation unit 50. In this case, the entire first mass flow that passed through the first heat exchanger 10 may be reintroduced into the second separation unit 50.

A portion of the (at least partially condensed) first mass flow may be discharged or collected or processed otherwise after passing through the first heat exchanger 10, preferably after passing through the first heat exchanger 10. Tubing 53 may connect the first heat exchanger 10 to a storage or connect tubing 15 to a storage. A portion of the (at least partially condensed) first mass flow may be discharged or collected after passing through the first heat exchanger 10 and a portion of the first mass flow may be reintroduced into the second separation unit 50, preferably as described above. It is also possible to collect the entire (at least partially condensed) first mass flow after passing through the first heat exchanger 10. In this case, no portion of the first mass flow may be reintroduced into the second separation unit 50 after passing through the first heat exchanger 10.

The second mass flow may be a bottom product, e.g., bottom liquid, of the second separation unit 50. When exiting the second separation unit 50, at least 50 mass-%, at least 70 mass-% or at least 90 mass-% or even substantially 100 mass-% of the first mass flow may be liquid. The second mass flow may contain solid substances or dissolved solids.

The second mass flow may receive (thermal) energy from the first partial flow in the second heat exchanger 40, e.g., as described above. In other words, in the second heat exchanger 40, the first partial flow may transfer (thermal) energy to second mass flow. The second mass flow may be at least partially evaporated in the second heat exchanger 40. Also, the second mass flow may be heated in the second heat exchanger 40, preferably without evaporation of the second mass flow in the second heat exchanger 40.

A portion of the (at least partially evaporated or only heated) second mass flow may be reintroduced into the second separation unit 50 via tubing 35, preferably after passing through the second heat exchanger 40. Tubing 35 may connect the second heat exchanger 40 to the second separation unit 50. It is also possible to reintroduce the entire (at least partially evaporated) second mass flow into the second separation unit 50, preferably after passing through the second heat exchanger 40. In this case, the entire second mass flow that passed through the second heat exchanger 10 may be reintroduced into the second separation unit 50.

A portion of the second mass flow may be discharged, collected, further processed or used as feed flow after exiting the second separation unit 50, and preferably before passing through the second heat exchanger 40. Tubing 52 may connect tubing 34 preferably to a storage for collecting the second mass flow.

The second heat exchanger 40 may serve as a heater or evaporator for the second separation unit 50.

The herein disclosed systems and methods may be used in the production of ethanol, preferably bioethanol, and/or potable alcohol. The herein disclosed systems and methods may also be used in the recovery, purification and/or concentration of solvents and in the evaporation, purification and/or concentration of liquids.

The first heat exchanger 10, the first separation unit 20, the compression unit 30 and the second heat exchanger 40 may have the functionality of a heat pump, preferably (thermally) connected to a second separation process (e.g., in the second separation unit 50). A feed flow may be used in the "heat pump" and may be partially evaporated. The partially evaporated feed flow may be separated in the first separation unit 20. After at least partial condensation (e. g. in the second heat exchanger 40), the first partial flow of the first separation unit 20 may be the condensate from the feed flow and the second partial flow of the first separation unit 20 may be the concentrated feed flow. The heat source and the heat sink of the "heat pump" process may be related to a second (separation) process, e. g., a process related to the second separation unit 50. The process related to the second separation unit 50 may not be in direct communication with the "heat pump" process.

### LIST OF REFERENCE SIGNS

- 100: System
- 10: First heat exchanger
- 20: Separation unit
- 30: Compression unit
- 40: Second heat exchanger
- 11,12,14,15,21,23,25,27,31,32,33,34,35,37,38: Tubing
- 200: System
- 50: Separation unit
- 51, 52, 53: Tubing

## Claims

1. A system (100) comprising:
at least one first heat exchanger (10) configured to transfer energy from a first mass flow to a first feed flow;
at least one first separation unit (20) configured to separate the first feed flow into at least a first partial flow and a second partial flow;
at least one compression unit (30) configured to transfer energy to the first partial flow; and
at least one second heat exchanger (40) configured to transfer energy from the first partial flow to a second mass flow,
wherein the first mass flow and/or the second mass flow is not in fluid flow communication with the first separation unit (20).

2. The system of claim 1, wherein the first separation unit (20) is configured to separate the first feed flow into an at least partially gaseous phase and an at least partially liquid phase, preferably wherein the first separation unit (20) is a gas-liquid separator, a centrifugal separator, an inertial separator, a gravity separator, a vessel, or a demister, in particular a wire mesh demister or a lamella demister.

3. The system of any one of the preceding claims, wherein the first heat exchanger (10) includes the first separation unit (20).

4. The system of any one of the preceding claims, wherein the compression unit (30) is configured to increase the density, the temperature and/or the pressure of the first partial flow, preferably wherein the compression unit (30) is a single-stage or multi-stage mechanical compression unit and/or a single-stage or multi-stage thermal compression unit.

5. The system of any one of the preceding claims, wherein the first heat exchanger (10) is configured to at least partially evaporate the first feed flow and/or wherein the second heat exchanger (40) is configured to at least partially condense the first partial flow.

6. The system of any one of the preceding claims, further comprising at least one second separation unit (50), wherein the first mass flow and/or the second mass flow is in fluid flow communication with the second separation unit (50).

7. The system of claim 6, wherein the second separation unit (50) is configured to separate a second feed flow into the first mass flow and into the second mass flow, preferably wherein the second separation unit (50) is a single-stage distillation or rectification column, in particular a concentration and/or stripper column, or a multi-stage distillation or rectification column system.

8. The system of claim 6 or 7, wherein the first mass flow is at least partially gaseous and a top product of the second separation unit (50) and/or wherein the second mass flow is at least partially liquid and a bottom product of the second separation unit (50).

9. A method for separating a first feed flow, the method comprising the following steps:
transferring, by at least one first heat exchanger (10), energy from a first mass flow to a first feed flow;
separating, by at least one first separation unit (20), the first feed flow into at least a first partial flow and a second partial flow;
transferring, by at least one compression unit (30), energy to the first partial flow; and
transferring, by at least one second heat exchanger (40), energy from the first partial flow to a second mass flow,
wherein the first mass flow and/or the second mass flow is not in fluid flow communication with the first separation unit (20).

10. The method of claim 9, wherein the first feed flow is at least partially evaporated by the energy transferred from the first mass flow and/or the first partial flow is at least partially condensed by the energy transferred to the second mass flow.

11. The method of claim 9 or 10, wherein the density, the temperature and/or the pressure of the first partial flow is increased by the compression unit (30).

12. The method of any one of claims 9 to 11, wherein the first mass flow and/or the second mass flow is in fluid flow communication with a second separation unit (50).

13. The method of claim 12, wherein a second feed flow is separated into at least the first mass flow and the second mass flow by the second separation unit (50).

14. The method of claim 12 or 13, wherein at least a portion of the first mass flow is fed into the second separation unit (50) after passing through the first heat exchanger (10) and/or at least a portion of the second mass flow is fed into the second separation unit (50) after passing through the second heat exchanger (40).

15. The method of any one of claims 12 to 14, wherein at least a portion of the second partial flow is introduced into the first feed flow, preferably before the first heat exchanger (10).

## Amended claims

### Amended claims in accordance with Rule 137(2) EPC.

1. A system (100) comprising:
at least one first heat exchanger (10) configured to transfer energy from a first mass flow to a first feed flow;
at least one first separation unit (20) configured to separate the first feed flow into at least a first partial flow and a second partial flow;
at least one compression unit (30) configured to transfer energy to the first partial flow; and
at least one second heat exchanger (40) configured to transfer energy from the first partial flow to a second mass flow,
wherein the first mass flow and the second mass flow are not in fluid flow communication with the first separation unit (20), and
(I) wherein a first tubing (21) connects the first separation unit (20) to the compression unit (30), and a second tubing (23) for discharging or collecting a portion of the first partial flow is connected to the first tubing (21), or
(II) wherein a third tubing (27) connects the first separation unit (20) to the first heat exchanger (10), and a fourth tubing (25) for discharging or collecting at least a portion of the second partial flow is connected to the third tubing (27).

2. The system of claim 1, wherein the first separation unit (20) is a gas-liquid separator, a centrifugal separator, an inertial separator, a gravity separator, a vessel, or a demister, in particular a wire mesh demister or a lamella demister.

3. The system of any one of the preceding claims, wherein the first heat exchanger (10) includes the first separation unit (20).

4. The system of any one of the preceding claims, wherein the compression unit (30) is configured to increase the density, the temperature and/or the pressure of the first partial flow, preferably wherein the compression unit (30) is a single-stage or multi-stage mechanical compression unit and/or a single-stage or multi-stage thermal compression unit.

5. The system of any one of the preceding claims, wherein the first heat exchanger (10) is configured to at least partially evaporate the first feed flow and/or wherein the second heat exchanger (40) is configured to at least partially condense the first partial flow.

6. The system of any one of the preceding claims, further comprising at least one second separation unit (50), wherein the first mass flow and the second mass flow are in fluid flow communication with the second separation unit (50).

7. The system of claim 6, wherein the second separation unit (50) is configured to separate a second feed flow into the first mass flow and into the second mass flow, preferably wherein the second separation unit (50) is a single-stage distillation or rectification column, in particular a concentration and/or stripper column, or a multi-stage distillation or rectification column system.

8. The system of claim 6 or 7, wherein the first mass flow is at least partially gaseous and a top product of the second separation unit (50) and/or wherein the second mass flow is at least partially liquid and a bottom product of the second separation unit (50).

9. A method for separating a first feed flow, the method comprising the following steps:
transferring, by at least one first heat exchanger (10), energy from a first mass flow to a first feed flow;
separating, by at least one first separation unit (20), the first feed flow into at least a first partial flow and a second partial flow;
transferring, by at least one compression unit (30), energy to the first partial flow; and
transferring, by at least one second heat exchanger (40), energy from the first partial flow to a second mass flow,
wherein the first mass flow and the second mass flow are not in fluid flow communication with the first separation unit (20), and
(I) wherein a portion of the first partial flow is discharged or collected, or
(II) wherein at least a portion of the second partial flow after exiting the first separation unit (20) is discharged or collected.

10. The method of claim 9, wherein the first feed flow is at least partially evaporated by the energy transferred from the first mass flow and/or the first partial flow is at least partially condensed by the energy transferred to the second mass flow.

11. The method of claim 9 or 10, wherein the density, the temperature and/or the pressure of the first partial flow is increased by the compression unit (30).

12. The method of any one of claims 9 to 11, wherein the first mass flow and the second mass flow are in fluid flow communication with a second separation unit (50).

13. The method of claim 12, wherein a second feed flow is separated into at least the first mass flow and the second mass flow by the second separation unit (50).

14. The method of claim 12 or 13, wherein at least a portion of the first mass flow is fed into the second separation unit (50) after passing through the first heat exchanger (10) and/or at least a portion of the second mass flow is fed into the second separation unit (50) after passing through the second heat exchanger (40).

15. The method of any one of claims 12 to 14, wherein at least a portion of the second partial flow is introduced into the first feed flow, preferably before the first heat exchanger (10).
